# EUROPÄISCHE PATENTSCHRIFT

(11) **EP 4 157 674 B1**
(45) Veröffentlichungstag und Bekanntmachung des Hinweises auf die Patenterteilung: **22.05.2024**
(21) Anmeldenummer: 21716711.3
(22) Anmeldetag: 01.04.2021
(51) Int. Cl.: B60R 1/06

(54) **RÜCKSPIEGELANORDNUNG FÜR EIN FAHRZEUG**
REAR VIEW MIRROR ARRANGEMENT FOR A VEHICLE
AGENCEMENT DE RÉTROVISEUR POUR VÉHICULE

(30) Priorität: 25.05.2020 DE 102020113913
(43) Veröffentlichungstag der Anmeldung: 05.04.2023
(73) Patentinhaber: Bayerische Motoren Werke Aktiengesellschaft, 80809 München (DE)
(72) Erfinder: SCHLAYER, Andreas, 81547 München (DE); BAUDERMANN, Markus, 81379 München (DE)
(86) Internationale Anmeldenummer: PCT/EP2021/058673
(87) Internationale Veröffentlichungsnummer: WO 2021/239304

(56) Entgegenhaltungen:
- DE-A1- 3 923 932
- DE-A1-102009 047 919
- JP-A- H01 249 544
- JP-A- H08 216 782

## Beschreibung

Die Erfindung betrifft eine Rückspiegelanordnung für ein Fahrzeug, insbesondere für ein Neigefahrzeug, mit einem Spiegelelement und einem das Spiegelelement aufnehmenden Gehäuse.

Bei Fahrzeugen, wie beispielsweise bei Motorrädern, sind Rückspiegelanordnungen bekannt, die lenkerfest montiert sind und ein schalenförmiges Spiegelgehäuse aufweisen. Im Inneren des schalenförmigen Gehäuses ist eine massive Trageplatte für das Spiegelglas angeordnet, die einerseits fest mit dem Gehäuse verschraubt ist. Andererseits ist das Spiegelglas als nicht-tragendes Element mit doppelseitigem Klebeband auf diese Trageplatte aufgeklebt. Die Trageplatte ist also als selbsttragendes beziehungsweise formstabiles Element ausgebildet und weist demensprechend ein vergleichsweise hohes Gewicht auf, welches sich aufgrund einer exzentrischen Position am gesamten Fahrzeug negativ auf dessen Fahrverhalten auswirken kann.

Darüber hinaus sind Rückspiegelanordnungen erhältlich, die ein schalenförmiges Spiegelgehäuse mit integrierten domförmigen Fortsätzen im Gehäuseinneren aufweisen, wobei ein Spiegelglas mit Heißklebstoff unmittelbar auf die domförmigen Fortsätze aufgeklebt ist. Diese Rückspiegelanordnungen haben aufgrund der vereinfachten Bauweise ein besonders geringeres Gewicht. Jedoch weist die Verklebung in der Regel eine gewisse - wenn auch sehr geringe - Elastizität auf, wodurch zumindest kleinste Relativbewegungen des Spiegelglases gegenüber dem Gehäuse möglich sind. Vibrationen im Fahrzeugbetrieb führen dementsprechend zu unbeabsichtigten Vibrationen des Spiegelglases. Speziell beim Auftreten von Vibrationen im Bereich der Eigenfrequenz des Spiegelglases können Resonanzen auftreten und eine Nutzung des Rückspiegels besonders stark beeinträchtigen.

Die JP H08 216782 A betrifft einen Rückspiegel für ein Fahrzeug, wobei zwischen dem Spiegelglas und einem Gehäuse des Rückspiegels ein Schaumkörper angeordnet ist.

Die DE 10 2009 047 919 A1 betrifft eine Glaseinheit für Spiegel mit einer Glasträgerplatte, die eine Vorderseite, eine Rückseite und eine umlaufende Randzone umfasst, und einer Spiegelscheibe, die eine Spiegelscheibenvorderseite, eine Spiegelscheibenrückseite und einen umlaufenden Rand aufweist, wobei die Spiegelscheibe mit ihrer Rückseite mittels einer Kleberschicht auf der Vorderseite der Glasträgerplatte befestigt ist, wobei sich von der Vorderseite der Glasträgerplatte aus der Randzone der Glasträgerplatte Haltestege erstrecken, wobei die Haltestege über die umlaufende Randzone verteilt angeordnet sind und wobei der umlaufende Rand der Spiegelscheibe an den Haltestegen anliegt.

Die JP H01 249544 betrifft einen Spiegel mit einem annähernd schüsselförmigen Spiegelgehäuse, wobei das Spiegelglas über eine Trägerplatte flexibel am Spiegelgehäuse angebunden ist. Die in der JP H01 249544 offenbarte Rückspiegelanordnung entspricht dem Oberbegriff des Anspruchs 1.

Die DE 39 23 932 A1 betrifft einen Bausatz für einen Fahrzeugaußenspiegel, welcher eine am Fahrzeug anbringbare Trägerplatte zur Halterung des Gehäuses, der Spiegelplatte und der Verstelleinrichtung aufweist, wobei an den vorgenannten Bestandteilen des Bausatzes Anschlusselemente so angeordnet und ausgebildet sind, dass die Trägerplatte für die Halterung einer Vielzahl unterschiedlicher Spiegel- und/oder Gehäuseformen verwendbar ist.

Es ist daher eine Aufgabe der Erfindung einen Rückspiegel eines Fahrzeugs derart weiterzuentwickeln, dass zumindest einer oder mehrere der genannten Nachteile des Stands der Technik vermieden oder zumindest reduziert werden.

Diese Aufgabe wird gelöst mit einer Rückspiegelanordnung für ein Fahrzeug gemäß dem Gegenstand des Patentanspruchs 1 sowie einem Fahrzeug gemäß der in Patentanspruch 8 beschriebenen Merkmalskombination. Vorteilhafte Ausführungsformen ergeben sich aus den jeweils hiervon abhängigen Patentansprüchen.

Demnach wird eine Rückspiegelanordnung für ein Fahrzeug vorgeschlagen, mit:
- einem Spiegelelement und
- einem das Spiegelelement aufnehmenden Gehäuse,
wobei das Gehäuse eine innere Oberfläche aufweist, auf welcher mindestens ein Befestigungsfortsatz ausgebildet ist, und das Spiegelelement mit einer der inneren Oberfläche zugewandten Rückseite mit dem mindestens einen Befestigungsfortsatz verbunden ist. Außerdem ist das Spiegelelement mit einem Abstützmittel verbunden, welches zur zumindest abschnittsweisen Abstützung an dem Gehäuse ausgebildet ist.

Als Fahrzeuge im Rahmen dieser Beschreibung kommen grundsätzlich alle Land-, Wasser- und Luftfahrzeuge in Betracht, die eine entsprechende Rückspiegelanordnung aufweisen. So kann die Rückspiegelanordnung auch für Wasserfahrzeuge, wie Boote eingesetzt werden. Bei Landfahrzeugen ist ein Einsatz sowohl bei motorgetriebenen Kraftfahrzeugen als auch bei nicht-angetriebenen Fahrzeugen, wie beispielsweise Fahrrädern, realisierbar. Neben Personenkraftwagen und Lastkraftwagen ist ein Einsatz auch bei anderen motorgetriebenen Fahrzeugen, wie beispielsweise Rollstühlen, Schneemobilen, Dreirädern oder Quads sowie vorzugsweise bei sogenannten Neigefahrzeugen möglich. Unter einem Neigefahrzeug werden unter anderem Motorräder oder motorradähnliche Kraftfahrzeuge, wie Motorroller, insbesondere neigefähige zwei-, drei- oder vierrädrige Motorroller, Scooter oder Dergleichen verstanden.

Das Spiegelelement umfasst insbesondere ein Spiegelglas mit Spiegelfläche zur Bereitstellung einer Spiegelwirkung und ist an seiner Rückseite direkt mit dem einen oder den mehreren Befestigungsfortsätzen verbunden. Diese sind auf der inneren Oberfläche des Gehäuses vorgesehen und können einstückig beziehungsweise einteilig mit der inneren Oberfläche beziehungsweise mit dem Gehäuse ausgebildet und hergestellt sein. Alternativ können die Befestigungsfortsätze und das Gehäuse separat voneinander hergestellt und anschließend miteinander verbunden werden.

Als Rückseite des Spiegelelements ist insbesondere die nicht zur Nutzung der Spiegelfläche vorgesehene und einem Gehäuseinneren zugewandte Oberfläche des Spiegelelements zu verstehen. Das Gehäuseinnere wird insbesondere durch einen von dem Gehäuse vollständig oder zumindest teilweise umschlossenen Innenraum beziehungsweise Hohlraum definiert. Beispielsweise kann das Gehäuse schalenförmig ausgebildet sein, so dass das Gehäuseinnere durch den von einer Gehäusewandung begrenzten Innenraum definiert wird. Zusätzlich ist das Abstützmittel vorgesehen, das einerseits mit dem Spiegelelement verbunden und andererseits lediglich abschnittsweise oder vollständig umlaufend an einem Rand des Spiegelelements angeordnet ist, um sich an dem Gehäuse abzustützen.

Zur Bereitstellung der Abstützung, kann das Abstützmittel derart dimensioniert und ausgestaltet sein, dass das Abstützmittel im verbauten Zustand formschlüssig mit dem Gehäuse verbunden. Vorzugsweise wird der Formschluss durch zwischen dem Abstützmittel und der inneren Oberfläche des Gehäuses gebildet. Auf diese Weise wird eine passgenaue und spielfreie Verbindung erzielt, die es ermöglicht auch kleine Relativbewegungen zwischen dem Abstützmittel und dem Gehäuse zu vermeiden oder zumindest zu reduzieren. Hiervon profitiert entsprechend das mit dem Abstützmittel verbundene Spiegelelement.

Zwar sind das Spiegelelement und das Gehäuse bereits über die Befestigungsfortsätze lokal miteinander verbunden. Ist jedoch eine (Rest-) Elastizität dieser Verbindung nicht zu vermeiden, können dennoch Relativbewegungen, insbesondere in Form von Vibrationen, auftreten. In diesem Fall kann mit Hilfe des zusätzlichen Abstützmittels diesen Relativbewegungen wirkungsvoll entgegengewirkt werden, indem das Spiegelelement mit Hilfe des Abstützmittels zusätzlich an dem Gehäuse beziehungsweise an dessen innerer Oberfläche abgestützt ist. Somit bleibt das Spiegelelement auch beim Auftreten von Vibrationen im Betrieb des Fahrzeugs nutzbar.

Dieser Aufbau bietet die Möglichkeit, dass auf eine separate massive und aufwendig zu verschraubende Glastragplatte gemäß dem Stand der Technik verzichtet werden kann, wodurch deren zusätzliche Masse und Gewicht entfallen.

Wie beschrieben, kann das Abstützmittel mit der Rückseite des Spiegelelements verbunden sein. Diese Verbindung kann vorzugsweise stoffschlüssig, insbesondere durch Verklebung erfolgen. Alternativ oder zusätzlich hierzu ist eine kraftschlüssige und/oder formschlüssige Verbindung des Abstützmittels mit der Rückseite des Spiegelelements möglich.

Das Abstützmittel selbst kann beispielsweise aus Kunststoff oder metallischem Werkstoff gefertigt sein.

Vorzugsweise kann das Abstützmittel zumindest abschnittsweise plattenförmig ausgebildet sein und einen Randabschnitt aufweisen, der zumindest abschnittsweise über einen Rand des Spiegelelements übersteht, um das Abstützmittel an der inneren Oberfläche des Gehäuses abzustützen.

Dies bedeutet, dass das Abstützmittel im Wesentlichen als flaches, ebenes Bauteil ausgebildet sein kann.

Um ein möglichst geringes Gewicht des Abstützmittels zu erzielen, kann eine Dicke des plattenförmigen Abschnitts des Abstützmittels im Vergleich zu einer flächigen Erstreckung klein sein. Die Dicke kann beispielsweise weniger als 5 mm, vorzugsweise weniger als 2 mm, besonders bevorzugt weniger als 1 mm betragen.

Der Überstand des Abstützmittels über den Rand des Spiegelelements hinaus kann derart dimensioniert sein, dass das Spiegelelement in diesem Randbereich nicht in Kontakt mit dem Gehäuse kommt und stattdessen ein Spalt zwischen dem Spiegelelement und dem Gehäuse verbleibt. Dieser Spalt kann lediglich abschnittsweise oder vollständig umlaufend entlang eines Randes des Spiegelelements vorgesehen sein. Beispielsweise kann der Überstand des Abstützmittels gegenüber dem Rand des Spiegelelements weniger als 5 mm, vorzugsweise weniger als 2 mm, besonders bevorzugt weniger als 1 mm, betragen.

Mit anderen Worten dargestellt, ermöglicht der Überstand des Abstützmittels, dass das Abstützmittel passgenau und formschlüssig im Gehäuse aufgenommen und gelagert werden kann, wohingegen das Spiegelelement in seinem Randbereich selbst keinen Kontakt zum Gehäuse aufweist. Auf diese Weise können auch größere Toleranzen, die bei der Fertigung des Spiegelelements auftreten können, leicht ausgeglichen werden. Eine unmittelbare und dauerhafte Verbindung eines Randes des Spiegelelements mit dem Gehäuse wäre aufgrund großer Fertigungstoleranzen bei der Herstellung von Spiegelgläsern dagegen nur schwer bereitzustellen.

Das Abstützmittel wirkt also als zwischengeordnete Adapterplatte und fixiert mittels seiner eigenen passgenauen Verbindung mit dem Gehäuse das Spiegelelement in der gewünschten Position und unterbindet damit wirkungsvoll dessen Relativbewegungen gegenüber dem Gehäuse.

Gemäß einer Ausführungsform kann der Randabschnitt des Abstützmittels eine konische Form aufweisen. Zum Beispiel kann der Randabschnitt einen Flansch oder Fortsatz bilden, der jeweils senkrecht zu einer durch das Spiegelelement definierten Ebene ausgerichtet ist und in dieser Richtung verjüngend ausgeführt ist. Dies ermöglicht einen exakten und passgenauen Kontakt mit der inneren Oberfläche des Gehäuses.

Außerdem kann die Verbindung zwischen dem Abstützmittel mit der Rückseite des Spiegelelements zumindest abschnittsweise flächig ausgebildet sein. Dies bedeutet, dass das Abstützmittel in einem oder in mehreren Abschnitten oder vollständig mit einer dem Spiegelelement zugewandten Oberfläche in flächiger Verbindung mit der Rückseite des Spiegelelements steht. Vorzugsweise ist die Verbindung als stoffschlüssige Verbindung ausgeführt, beispielsweise durch Verklebung, vorzugsweise durch eine flächige Verklebung, zum Beispiel durch doppelseitiges Klebeband beziehungsweise doppelseitige Klebefolie.

Selbstverständig ist auch im Fall der flächigen Verbindung zwischen Abstützmittel und Spiegelelement die voranstehend genannte alternative oder zusätzliche formschlüssige und/oder kraftschlüssige Verbindung oder eine beliebige Kombination der drei genannten Verbindungsarten zur Verbindung des Abstützmittels mit dem Spiegelelement möglich.

Des Weiteren kann das Abstützmittel zumindest eine Ausnehmung aufweisen, welche derart angeordnet ist, dass das Abstützmittel zumindest in einem Verbindungsabschnitt, der jeweils durch die Verbindung der Rückseite des Spiegelelements mit dem mindestens einen Befestigungsfortsatz gebildet ist, ausgespart ist.

Dies bietet die Möglichkeit, dass die Rückseite des Spiegelelements trotz einer (eventuell flächigen) Verbindung mit dem Abstützmittel einen oder mehrere freie Abschnitte aufweist, in denen die Rückseite des Spiegelelements unmittelbar mit den Befestigungsfortsätzen verbunden sein kann.

Alternativ kann das Spiegelelement mittelbar über das Abstützmittel mit den Befestigungsfortsätzen verbunden sein. Hierbei ist auf der Rückseite des Spiegelelements das Abstützmittel aufgebracht, welches wiederum mit dem mindestens einen Befestigungsfortsatz verbunden ist. In diesem Fall ist es möglich, dass das Abstützmittel die Rückseite des Spiegelelements vollständig und flächig bedeckt.

Des Weiteren kann das Abstützmittel nicht-selbstragend ausgebildet sein. Dies bedeutet beispielsweise, dass das Abstützmittel selbst nicht oder zumindest nicht in Gesamtheit formstabil ausgebildet ist, so dass das Abstützmittel dem Spiegelelement keine zusätzliche Tragfähigkeit oder Steifigkeit verleiht. Stattdessen wird das Spiegelelement als tragendes Element genutzt.

Außerdem kann das Abstützmittel eine versteifende Rippenstruktur aufweisen. Die Rippenstruktur ist beispielsweise in dem Randbereich des Abstützmittels vorgesehen, um eine formstabile Geometrie zumindest des Randbereichs des Abstützelements bereitzustellen, um eine zuverlässige Abstützung an dem Gehäuse sicherzustellen.

Hinsichtlich der Verbindung des Spiegelelements mit dem Gehäuse, kann die Verbindung der Rückseite des Spiegelelements mit dem mindestens einen Befestigungsfortsatz stoffschlüssig und/oder formschlüssig und/oder kraftschlüssig ausgebildet sein. Beispielsweise kann die Verbindung auf einfache Art und Weise mittels Heißkleber beziehungsweise Flüssigkleber erfolgen.

Gemäß einer Ausführungsform kann der mindestens eine Befestigungsfortsatz an einem von der inneren Oberfläche entfernt angeordneten freien Ende eine Verbindungsfläche zum flächigen Verbinden mit der Rückseite des Spiegelelements aufweisen. Zum Beispiel kann der mindestens eine Befestigungsfortsatz domförmig, rippenförmig oder als sogenannter Schiebepodest (also als durch einen Schieber erzeugte Geometrie aus der Seitenwand des Gehäuses) beziehungsweise als Retainer ausgebildet sein.

Zusammenfassend kann also eine Rückspiegelanordnung bereitgestellt werden, die aufgrund der (randseitigen) Abstützung des Spiegelelements mittels des Abstützmittels verbesserte Schwingungseigenschaften aufweist. Außerdem kann mit Hilfe des beschriebenen Aufbaus ein geringes Gewicht der Rückspiegelanordnung sichergestellt und damit eine negative Beeinflussung des Fahrverhaltens des gesamten Fahrzeugs verhindert werden. Der Aufbau ermöglicht zudem eine einfache Montage, unter anderem durch den Entfall einer Verschraubung bei gleichzeitig geringem Materialbedarf. Ein weiterer Vorteil besteht in der spannungsfreien Montage des Spiegelelements, welche aufgrund des beschriebenen Aufbaus der Rückspiegelanordnung ohne Spannungsbildung ermöglicht ist.

Des Weiteren wird ein Fahrzeug mit mindestens einer Rückspiegelanordnung vorgeschlagen, wobei die mindestens eine Rückspiegelanordnung gemäß dieser Beschreibung ausgebildet ist.

Die Erfindung wird nachfolgend anhand eines Ausführungsbeispiels unter Bezugnahme auf die Zeichnungen näher erläutert. Es zeigen:
- Fig. 1:: eine Rückspiegelanordnung gemäß der Beschreibung,
- Fig. 2:: einen Verbund aus Abstützmittel und Spiegelelement für die Rückspiegelanordnung gemäß Fig. 1, und
- Fig. 3:: eine Schnittansicht der Rückspiegelanordnung gemäß Fig. 1.

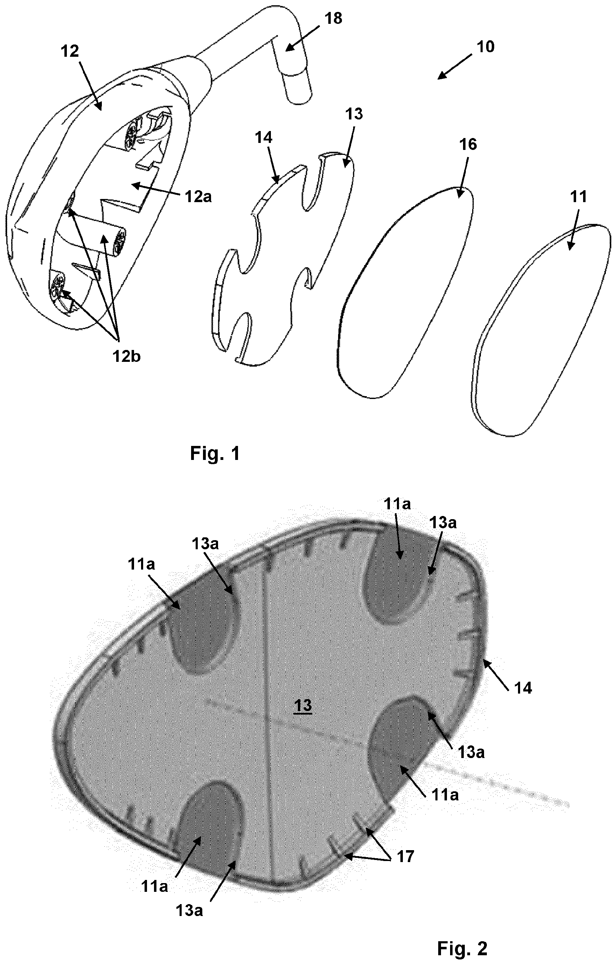

Fig. 1 zeigt eine Rückspiegelanordnung 10 für ein Fahrzeug (nicht dargestellt) gemäß der Beschreibung in einer Explosionsansicht. Demnach umfasst die Rückspiegelanordnung 10 ein Spiegelelement 11 und ein das Spiegelelement 11 aufnehmendes Gehäuse 12, welches über einen stabförmigen Halter 18 am Fahrzeug befestigt werden kann.

Das Spiegelelement 11 wird in der dargestellten Ausführungsform von einem Spiegelglas gebildet, welches eine Spiegelfläche bereitstellt.

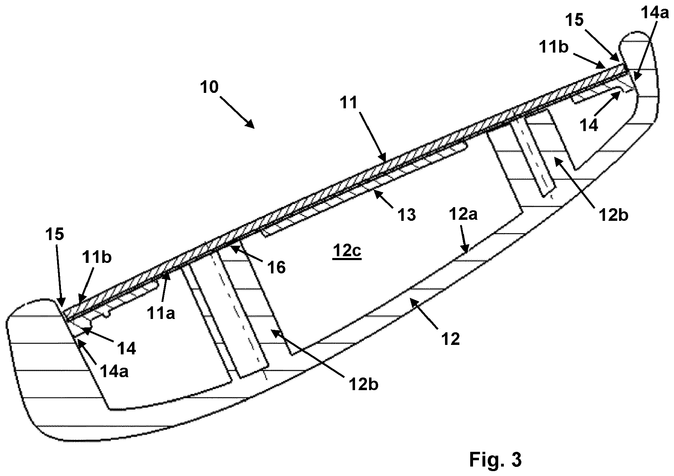

Das Gehäuse 12 ist im Wesentlichen schalenförmig ausgebildet und weist eine innere Oberfläche 12a auf, auf welcher vier Befestigungsfortsätze 12b ausgebildet sind, wobei die Befestigungsfortsätze 12b dazu vorgesehen sind, mit einer der inneren Oberfläche 12a zugewandten Rückseite 11a des Spiegelelements 11 verbunden zu werden (vgl. Fig. 3). Hierzu sind die Befestigungsfortsätze 12b domförmig ausgeführt und weisen an einem von der inneren Oberfläche 12a entfernt angeordneten freien Ende eine Verbindungsfläche zum flächigen Verbinden mit der Rückseite 11a des Spiegelelements 11 auf. Diese Verbindung kann stoffschlüssig und/oder formschlüssig und/oder kraftschlüssig ausgebildet sein, vorzugsweise mittels Heißkleber beziehungsweise Flüssigkleber.

Des Weiteren ist das Spiegelelement 11 mit einem Abstützmittel 13 verbunden (siehe Fig. 2 und 3), welches zur zumindest abschnittsweisen Abstützung an dem Gehäuse 12 ausgebildet ist.

Das Abstützmittel 13 ist plattenförmig ausgebildet und weist einen Randabschnitt 14 auf, der - wie in Fig. 3 ersichtlich - über einen Rand 11b des Spiegelelements 11 übersteht, um das Abstützmittel 13 an der inneren Oberfläche 12a des Gehäuses 12 abzustützen. Aufgrund des Überstands des Abstützmittels 13 über den Rand 11b des Spiegelelements 11 hinaus wird erreicht, dass das Spiegelelement 11 in diesem Randbereich nicht in Kontakt mit dem Gehäuse 12 kommt und stattdessen ein Spalt 15 zwischen dem Spiegelelement 11 und dem Gehäuse 12 verbleibt. Dieser Spalt 15 ist umlaufend entlang des Randes 11b des Spiegelelements 11 vorgesehen.

Beispielsweise kann der Überstand des Abstützmittels 13 gegenüber dem Rand 11b des Spiegelelements 11 weniger als 5 mm, vorzugsweise weniger als 2 mm, betragen.

Wie insbesondere aus Fig. 3 ersichtlich, ist das Abstützmittel 13 dank des Überstands passgenau und formschlüssig im Gehäuse 12 aufgenommen und gelagert. Das Spiegelelement 11 hat in seinem Randbereich selbst keinen (unmittelbaren) Kontakt zum Gehäuse 12.

Zusätzlich weist der Randabschnitt 14 des Abstützmittels 13 eine konische Form auf. Der Randabschnitt 14 bildet einen Flansch 14a beziehungsweise Fortsatz, der senkrecht zu einer durch das Spiegelelement 11 definierten Ebene ausgerichtet ist und in dieser Richtung (also in Richtung des Gehäuseinneren 12c) verjüngend ausgeführt ist. Das Abstützelement 13 kann damit leicht in die gewünschte Position gebracht und dort in passgenauen Kontakt mit der inneren Oberfläche 12a des Gehäuses 12 gebracht werden.

Das Abstützmittel 13 ist gemäß der dargestellten Ausführungsform flächig mit einem großen Abschnitt der Rückseite 11a des Spiegelelements 11 verbunden. Die Verbindung kann stoffschlüssig, beispielsweise durch eine flächige Verklebung mittels doppelseitiger Klebefolie 16, vorgesehen sein.

Zusätzlich weist das Abstützmittel 13 mehrere Ausnehmung 13a (beispielhaft dargestellt sind vier Ausnehmungen 13a) auf, welche derart angeordnet sind, dass das Abstützmittel 13 zumindest in einem jeweiligen Verbindungsabschnitt, der jeweils durch die Verbindung der Rückseite 11a des Spiegelelements 11 mit dem jeweiligen Befestigungsfortsatz 12b gebildet ist, ausgespart ist. So kann die Rückseite 11a des Spiegelelements 11 trotz der ansonsten flächigen Verbindung mit dem Abstützmittel 13 in diesen freien Abschnitten unmittelbar mit den Befestigungsfortsätzen 12b verbunden sein.

Zusätzlich weist das Abstützmittel 13 eine versteifende Rippenstruktur 17 auf. Die Rippenstruktur 17 ist in dem Randbereich 14 des Abstützmittels 13 vorgesehen, um eine formstabile Geometrie zumindest des Randbereichs 14 des Abstützelements 13 für eine zuverlässige Abstützung an dem Gehäuse 12 sicherzustellen.

## Patentansprüche

1. Rückspiegelanordnung (10) für ein Fahrzeug mit:
- einem Spiegelelement (11) und
- einem das Spiegelelement (11) aufnehmenden Gehäuse (12),
wobei das Gehäuse (12) eine innere Oberfläche (12a) aufweist, auf welcher mindestens ein Befestigungsfortsatz (12b) ausgebildetwobei das Spiegelelement (11) mit einem Abstützmittel (13) verbunden ist, welches zur zumindest abschnittsweisen Abstützung an dem Gehäuse (12) ausgebildet ist,
wobei das Abstützmittel (13) abschnittsweise oder vollständig umlaufend an einem Rand des Spiegelelements (11) angeordnet ist, um sich an dem Gehäuse (12) abzustützen, **dadurch gekennzeichnet, dass** das Spiegelelement (11) mit einer der inneren Oberfläche (12a) zugewandten Rückseite (11a) mit dem mindestens einen Befestigungsfortsatz (12b) direkt verbunden ist.

2. Rückspiegelanordnung (10) nach Anspruch 1, **dadurch gekennzeichnet, dass** das Abstützmittel (13) zumindest abschnittsweise plattenförmig ausgebildet ist und einen Randabschnitt (14) aufweist, der zumindest abschnittsweise über einen Rand (11b) des Spiegelelements (11) übersteht, um das Abstützmittel (13) an der inneren Oberfläche (12a) des Gehäuses (12) abzustützen.

3. Rückspiegelanordnung (10) nach Anspruch 2, **dadurch gekennzeichnet, dass** der Randabschnitt (14) des Abstützmittels (13) eine konische Form aufweist.

4. Rückspiegelanordnung (10) nach mindestens einem der Ansprüche 1 bis 3, **dadurch gekennzeichnet, dass** die Verbindung zwischen dem Abstützmittel (13) und der Rückseite (11a) des Spiegelelements (11) zumindest abschnittsweise flächig ausgebildet ist.

5. Rückspiegelanordnung (10) nach mindestens einem der Ansprüche 1 bis 4, **dadurch gekennzeichnet, dass** das Abstützmittel (13) zumindest eine Ausnehmung (13a) aufweist, welche derart angeordnet ist, dass das Abstützmittel (13) zumindest in einem Verbindungsabschnitt, der jeweils durch die Verbindung der Rückseite (11a) des Spiegelelements (11) mit dem mindestens einen Befestigungsfortsatz (12b) gebildet ist, ausgespart ist.

6. Rückspiegelanordnung (10) nach mindestens einem der Ansprüche 1 bis 5, **dadurch gekennzeichnet, dass** das Abstützmittel (13) nicht-selbstragend ausgebildet ist.

7. Rückspiegelanordnung (10) nach mindestens einem der Ansprüche 1 bis 6, **dadurch gekennzeichnet, dass** das Abstützmittel (13) eine versteifende Rippenstruktur (17) aufweist.

8. Fahrzeug mit mindestens einer Rückspiegelanordnung (10), wobei die mindestens eine Rückspiegelanordnung (10) gemäß einem der Ansprüche 1 bis 7 ausgebildet ist.

## Claims

1. Rear view mirror arrangement (10) for a vehicle with
- a mirror element (11) and
- a housing (12) that accommodates the mirror element (11),
wherein the housing (12) has an inner surface (12a), on which at least one fastening extension (12b) is formed, wherein the mirror element (11) is connected to a supporting means (13) which is formed on the housing (12) for support at least in some portions, wherein the supporting means (13) is arranged in some portions or fully circumferentially at an edge of the mirror element (11) in order to be supported on the housing (12), **characterized in that** the mirror element (11) is directly connected with a rear side (11a) facing the inner surface (12a) to the at least one fastening extension (12b).

2. Rear view mirror arrangement (10) according to Claim 1, **characterized in that** the supporting means (13) is formed to be plate-shaped at least in some portions and has an edge portion (14) which projects at least in some portions beyond an edge (11b) of the mirror element (11) in order to support the supporting means (13) on the inner upper surface (12a) of the housing (12).

3. Rear view mirror arrangement (10) according to Claim 2, **characterized in that** the edge portion (14) of the supporting means (13) has a conical shape.

4. Rear view mirror arrangement (10) according to at least one of Claims 1 to 3, **characterized in that** the connection between the supporting means (13) and the rear side (11a) of the mirror element (11) is formed over the whole surface at least in some portions.

5. Rear view mirror arrangement (10) according to at least one of Claims 1 to 4, **characterized in that** the supporting means (13) has at least one recess (13a) which is arranged in such a manner that the supporting means (13) is recessed at least in a connecting portion which is formed in each case by the connection of the rear side (11a) of the mirror element (11) to the at least one fastening extension (12b) .

6. Rear view mirror arrangement (10) according to at least one of Claims 1 to 5, **characterized in that** the supporting means (13) is formed to be non-self-supporting.

7. Rear view mirror arrangement (10) according to at least one of Claims 1 to 6, **characterized in that** the supporting means (13) has a stiffening rib structure (17).

8. Vehicle with at least one rear view mirror arrangement (10), wherein the at least one rear view mirror arrangement (10) is formed according to one of Claims 1 to 7.

## Revendications

1. Ensemble formant rétroviseur (10) destiné à un véhicule, ledit ensemble comprenant :
- un élément formant miroir (11) et
- un boîtier (12) recevant l'élément formant miroir (11),
le boîtier (12) comportant une surface intérieure (12a) sur laquelle est formée au moins une extension de fixation (12b),
l'élément formant miroir (11) étant relié à un moyen d'appui (13) qui est conçu pour venir en appui au moins par portions sur le boîtier (12),
le moyen d'appui (13) étant disposé par portions ou sur toute la périphérie sur un bord de l'élément formant miroir (11) afin de venir en appui sur le boîtier (12), **caractérisé en ce que** l'élément formant miroir (11) est relié directement à l'au moins une extension de fixation (12b) par une face arrière (11a), dirigée vers la surface intérieure (12a).

2. Ensemble formant rétroviseur (10) selon la revendication 1, **caractérisé en ce que** le moyen d'appui (13) est au moins par portions en forme de plaque et comporte une portion de bord (14) qui fait saillie au moins par portions d'un bord (11b) de l'élément formant miroir (11) afin que le moyen d'appui (13) vienne en appui sur la surface intérieure (12a) du boîtier (12).

3. Ensemble formant rétroviseur (10) selon la revendication 2, **caractérisé en ce que** la portion de bord (14) du moyen d'appui (13) a une forme conique.

4. Ensemble formant rétroviseur (10) selon l'une au moins des revendications 1 à 3, **caractérisé en ce que** la liaison entre le moyen d'appui (13) et la face arrière (11a) de l'élément formant miroir (11) est au moins par portions plane.

5. Ensemble formant rétroviseur (10) selon l'une au moins des revendications 1 à 4, **caractérisé en ce que** le moyen d'appui (13) comporte au moins un évidement (13a) qui est disposé de manière à ce que le moyen d'appui (13) est évidé au moins dans une portion de liaison qui est formée à chaque fois par la liaison de la face arrière (11a) de l'élément formant miroir (11) avec l'au moins une extension de fixation (12b).

6. Ensemble formant rétroviseur (10) selon l'une au moins des revendications 1 à 5, **caractérisé en ce que** le moyen d'appui (13) est conçu pour être non-autoportant.

7. Ensemble formant rétroviseur (10) selon l'une au moins des revendications 1 à 6, **caractérisé en ce que** le moyen d'appui (13) comporte une structure à nervures de rigidification (17).

8. Véhicule comprenant au moins un ensemble formant rétroviseur (10), l'au moins un ensemble formant rétroviseur (10) étant conçu selon l'une des revendications 1 à 7.
